## Europäisches Patentamt
## European Patent Office
## Office européen des brevets

(19)

(11) Veröffentlichungsnummer: **0 164 382**
**B1**

(12) # EUROPÄISCHE PATENTSCHRIFT

(45) Veröffentlichungstag der Patentschrift:
**18.05.88**

(51) Int. Cl.⁴: **F 25 B 15/12**

(21) Anmeldenummer: **85900099.4**

(22) Anmeldetag: **05.12.84**

(86) Internationale Anmeldenummer:
**PCT/EP 84/00388**

(87) Internationale Veröffentlichungsnummer:
**WO 85/02669 (20.06.85 Gazette 85/14)**

(54) **RESORPTIONS-WÄRMEWANDLERANLAGE.**

(30) Priorität: **09.12.83 DE 3344599**

(43) Veröffentlichungstag der Anmeldung:
**18.12.85 Patentblatt 85/51**

(45) Bekanntmachung des Hinweises auf die Patenterteilung:
**18.05.88 Patentblatt 88/20**

(84) Benannte Vertragsstaaten:
**AT BE CH FR GB LI NL SE**

(56) Entgegenhaltungen:
**EP-A-0 054 719**
**EP-A-0 056 147**
**EP-A-0 066 768**
**WO-A-82/03265**
**DE-A-3 018 739**
**DE-A-3 141 538**
**GB-A-2 002 505**

(73) Patentinhaber: **TCH THERMO- CONSULTING-HEIDELBERG GMBH, Tiergartenstrasse 17, D-6900 Heidelberg 1 (DE)**

(72) Erfinder: **MUCIC, Vinko, Finkenweg 1, D-6909 Walldorf (DE)**

(74) Vertreter: **Helber, Friedrich G., Dipl.- Ing., Patentanwälte Dipl.- Ing. F. G. Helber Dipl.- Ing. J.K. Zenz Giesser Weg 47, D-6144 Zwingenberg (DE)**

EP 0 164 382 B1

## Beschreibung

Die Erfindung betrifft eine Resorptions-Wärmewandleranlage, wie Wärmepumpe, Kälteanlage oder Wärmetransformator, die mit einem Zweistoff-Arbeitsmittel, insbesondere einem Ammoniak-Wassergemisch, betrieben wird, um von einer äußeren Wärmeenergiequelle zugeführte Wärmeenergie auf ein höheres Temperaturniveau anzuheben, wobei die Anlage zwei Lösungskreisläufe aufweist, in welchen das Arbeitsmittel in flüssiger Phase von einem niedrigeren auf ein höheres Druckniveau gebracht und wieder auf das niedrigere Druckniveau entspannt wird, und zwischen den beiden Kreisläufen sowohl niederdruck- als auch hochdruckseitig je eine Verbindung besteht, in welchen in der Dampfphase befindliches Arbeitsmittel übertritt, und wobei parallel zu den Verbindungen eine Ausgleichsverbindung für strömendes flüssiges Arbeitsmittel mit von der Konzentration des in den Verbindungen strömenden Arbeitsmittels verschiedener Konzentration mit einem Ventil vorgesehen ist.

Solche, mit Ammoniak-Wassergemisch als Arbeitsmittel betriebene Resorptions-Wärmewanderanlagen können beispielsweise als Wärmepumpen eingesetzt werden, mit welchen der Umwelt, z.B. der Umgebungsluft, Gewässern oder dem Erdreich Wärmeenergie auf relativ niedrigem Temperaturniveau entzogen und auf ein höheres Temperaturniveau gebracht werden kann, auf welchem sie dann zu Heizzwecken, für die die Erwärmung von Brauchwasser o.dgl. zur Verfügung steht.

Wenn andererseits Wärmeenergie, z.B. bei Fabrikationsprozessen in Form von Abdampf- oder Brüden bereits auf höherem Temperaturniveau zur Verfügung steht, kann diese Energie durch sogenannte Wärmetransformatoren auf ein solches Temperaturniveau angehoben, daß sie als Prozeßwärme erneut im Fabrikationsprozeß nutzbar gemacht werden kann.

Der kontinuerliche Betrieb solcher Anlagen setzt voraus, daß die Mengenbilanz des zwischen den beiden Kreisläufen der Anlage hoch- und niederdruckseitig überströmenden dampfförmigen Arbeitsmittels, und zwar auch hinsichtlich der Einzelbestandteile des Zweistoff-Gemischs ausgeglichen ist. Bei den bekannten Anlagen (Handbuch der Kältetechnik, Bd. 7, R. Plank, Verlag Springer, 1959, Seiten 7-19) wird dies dadurch gelöst, daß das Arbeitsmittel sowohl hoch- wie niederdruckseitig in gleicher Menge und mit gleicher Konzentration ausschließlich in Dampfform ausgetauscht wird, wobei die Anpassung der Konzentration den Einsatz einer Rektifizierungskolonne in dem Strömungszweig erfordert, in welchem ohne eine solche Rektifizierung sonst infolge der Betriebsweise des betreffenden Kreislaufs ein dampfförmiges Zweistoff-Gemisch mit höherem Anteil des höher siedenden Bestandteils als bei der aus dem anderen Kreislauf ausströmenden, dampfförmigen Phase ausgetauscht würde. Das Erfordernis der Verwendung einer solchen Rektifizierungskolonne und der Regelung ihres Betriebes derart, daß sie kontinuierlich ein dampfförmiges Zweistoff-Gemisch liefert, dessen Konzentration und Menge genau dem im anderen Strömungszweig überströmenden Zweistoff-Gemisch entspticht, führt zu einem hohen Geräteaufwand für die Rektifizierungskolonne, welcher entsprechend hohe Investitionskosten für die bekannten Anlagen erfordert.

In der DE-A-3 018 739 wurde demgegenüber bei einer Resorptions-Wärmepumpe bzw. Kältemaschine vorgeschlagen, anstelle des Aufwandes für die Rektifizierungskolonne zwischen den beiden Lösungskreisläufen eine Ausgleichsverbindung vorzusehen, über welche flüssiges Arbeitsmittel austauschbar und so die Mengenbilanz des zwischen den Lösungskreisläufen hoch- und niederdruckseitig überstömenden dampfförmigen Arbeitsmittels auch bezüglich der Einzelbestandteils ausgleichbar ist. Wie dies in der Praxis bei kontinuierlichem Betrieb der Wärmepumpe steuerungstechnisch erreicht werden soll, ist in der Vorveröffentlichung jedoch nicht offenbart.

Der Erfindung liegt daher die Aufgabe zugrunde, Resorptions-Wärmewandleranlagen mit Mengen- und Konzentrationsausgleich zwischen den Lösungskreisläufen über eine Ausgleichsverbindung so auszugestalten, daß ein kontinuierlicher Betrieb auch bei wechselnden Betriebszuständen möglich ist.

Ausgehend von einer Wärmewandleranlage der eingangs erwähnten Art wird diese Aufgabe erfindungsgemäß dadurch gelöst, daß in der hoch- und der niederdruckseitigen Verbindung der beiden Kreisläufe je ein Druck- und ein Temperatur-Meßfühler vorgesehen sind, aus deren Meßwerten jeweils die Konzentration der leichter siedenden dampfförmigen Komponente des Zweistoff-Arbeitsmittels bezogen auf die gesamte dampfförmige Menge des Arbeitsmittels errechnet wird, daß in einer der beiden Verbindungen ein Mengemesser für den Mengenstrom des durchströmenden dampfförmigen Arbeitsmittels angeordnet ist, wobei in der Ausgleichsverbindung zur Ermittlung des Konzentrationswerts des dort strömenden flüssigen Arbeitsmittels ebenfalls ein Druck- und ein Temperatur-Meßfühler vorgesehen sind und das in der Ausgleichsverbindung vorgesehene Ventil als steuerbares Regenventil ausgebildet ist, und daß eine über Signalleitungen mit den Meßfühlern und dem Mengenmesser verbundene zentrale Rechnereinheit vorgesehen ist, in welcher die über die Signalleitungen zugeführten meßwertproportionalen Signale laufend verarbeitet und zu einem Stellsignal für die Öffnung oeder Schließung des in der Ausgleichsverbindung angeordneten Regelventils umgewandelt werden, welches die Öffnung des Regelventils derart steuert, daß die Mengenbilanz des zwischen den beiden Kreixläufen strömenden dampfförmigen Arbeitsmittels ausgeglichen wird. Der Ausgleich der Mengenbilanz wird also durch eine in Abhängigkeit von den unterschiedlichen Konzentrationen des in den beiden Verbindungen und der Menge des in einer der Verbindungen strömenden Arbeitsmittels mengengesteuerter Ausgleichsströmung von flüssigem Arbeitsmittel paralell und zuzätzlich zu der anderen Verbindung bewirkt, wobei auch die Konzentration des Arbeitsmittels in der Ausgleichsströmung berücksichtigt wird. Die Berechnung der Menge der Ausgleichsströmung und ihre Einstellung über ein entsprechendes Öffnen bzw. Schließen des Regelventils erfolgt dabei kontinuierlich durch die zentrale Rechnereinheit.

Wenn die erfindungsgemäße Wärmewandleranlage eine Wärmepumpe (oder Kälteanlage) ist, ist die Ausgestaltung vorzugsweise so getroffen, daß der Mengenmesser in der hochdruckseitigen Verbindung zwischen den Kreisläufen und die Ausgleichsverbindung parallel zur niederdruckseitigen Verbindung angeordnet sind.

Wenn die Wärmewandleranlage dagegen als Wärmetransformator ausgebildet ist, wird die Ausgestaltung vorzugsweise so getroffen, daß der Mengenmesser in der niederdruckseitigen Verbindung zwischen den Kreisläufen und die Ausgleichsverbindung parallel zur hochdruckseitigen Verbindung angeordnet sind.

Die Erfindung ist in der folgenden Beschreibung in Verbindung mit der Zeichnung näher erläutert, und zwar

Fig. 1 ein schematisches Schaltbild einer Resorptions-Wärmepumpe mit bekanntem Aufbau;

Fig. 2 ein schematisches Schaltbild einer gegenüber der in Fig. 1 gezeigten Wärmepumpe in der erfindungsgemäßen Weise abgewandelten Wärmepumpe;

Fig. 3 ein Schaltbild eines nach dem Resorptionsprinzip arbeitenden Wärmetransformators mit bekanntem Aufbau; und

Fig. 4 ein Schaltbild eines gegenüber dem in Fig. 3 gezeigten Wärmetransformator in der erfindungsgemäßen Weise abgewandelten Wärmetransformators.

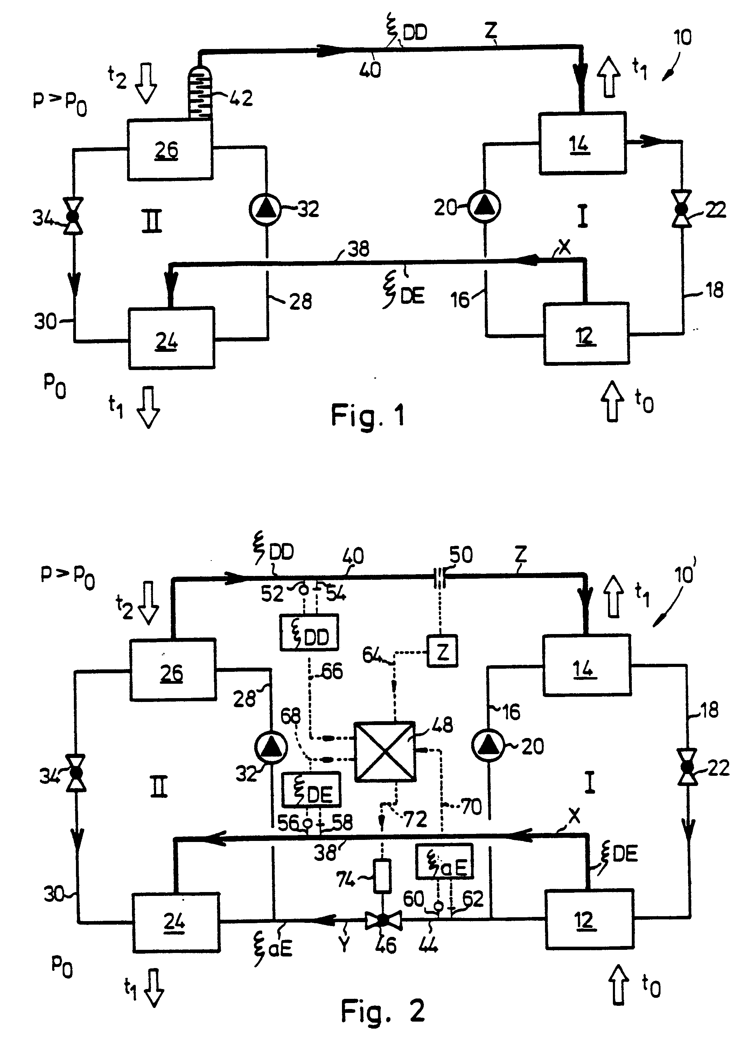

Aus dem in Figur 1 gezeigten grundsätzlichen schaltungsmäßigen Aufbau einer bekannten Resorptions-Wärmepumpe 10 geht hervor, daß diese zwei innere Kreisläufe I und II für flüssiges Arbeitsmittel aufweist, in deren - in der Zeichnungsfigur rechts dargestellten - Kreislauf I ein Entgaser 12 und ein Resorber 14 durch Leitungen 16 und 18 mit eingeschalteter Lösungspumpe 20 bzw. Drosselorgan 22 und in der Zeichnung links dargestellten zweitem Kreislauf II ein Absorber 24 und ein Desorber 26 durch Leitungen 28, 30 mit eingeschalteter Lösungspumpe 32 bzw. Drosselorgan 34 zusammengeschaltet sind. Im Entgaser 12 des ersten und dem Absorber 24 des zweiten Kreislaufs steht das Arbeitsmittel unter einem niedrigen Druck $p_0$, während es im Resorber 14 und im Desorber 26 auf einem Druck p gehalten wird.

Durch eine niederdruckseitig den Entgaser 12 und den Absorber 24 verbindende erste Verbindungsleitung 38 und eine hochdruckseitig den Desorber 26 und den Resorber 14 verbindende zweite Verbindungsleitung 40 sind die internen Kreisläufe I und II der Wärmepumpe 10 miteinander verbunden, wobei zwischen die Verbindungsleitung 40 und den hochdruckseitigen Desorber 26 noch eine Rektifizierungskolonne 42 zwischengeschaltet ist.

Die auf dem niedrigeren Temperaturniveau $t_0$ zur Verfügung stehende Energie wird im Entgaser 12 dazu verwendet, aus dem flüssigen Arbeitsmittel, d.h. dem Ammoniak-Wassergemisch, die leichter flüchtige Komponente, d.h. Ammoniak, auszutreiben, welche in einer Menge x mit der Konzentration $\xi_{DE}$ entstehen möge und über die Verbindungsleitung 38 zum Absorber 24 strömt, wo sie im flüssigen Arbeitsmittel des Kreislaufs II unter Energieabgabe bei dem angestrebten höheren Temperaturniveau $t_1$ wieder absorbiert wird. Die Konzentration des im Kreislauf II strömenden flüssigen Arbeitsmitels wird im Absorber 24 also entsprechend erhöht. Durch die Lösungspumpe 32 wird das Arbeitsmittel erhöhter Konzentration dann auf den Druck p erhöht und in den Resorber 26 gefördert, in welchem die leichter flüchtige Komponente Ammoniak) unter Zufuhr von Energie einer Temperatur $t_2$ wieder desorbiert wird und - über die Rektifikationskolonne 42 - in die Verbindungsleitung 40 und durch diese mit der Menge z und der Konzentration $\xi_{DD}$ zum Resorber 14 strömt, während der verbleibende flüssige Teil des Arbeitsmittels mit nun wieder geringerer Konzentration über die Leitung 30 zum Absorber 24 zurückströmt und dabei im Drosselorgan 34 wieder auf den Druck $p_0$ entspannt wird. Im Resorber 14 wird die über die Leitung 40 zugeführte gasförmige Komponente des Arbetitsmittels wieder unter Energieabgabe (auf dem Temperaturniveau $t_1$) im flüssigen Arbeitsmittel des Kreislaufs I resorbiert, welches dann über die Leitung 18 zum Entgaser 12 zurückströmt, wobei es im Drosselorgan 22 vom Druck p auf den Druck $p_0$ entspannt wird. Im Entgaser wird wiederum ein Teil der flüchtigen Komponente ausgetrieben und - in der bereits beschriebenen Weise - über die Verbindungsleitung 38 zum Absorber 24 geführt, während der aus dem Entgaser abströmende verbleibende Anteil des flüssigen Arbeitsmittels nun wiederum verringerter Konzentration von der Lösungspumpe 20 im Druck erhöht und zum Resorber 14 gefördert wird.

Der beschriebene Kreislauf kann nur dann kontinuierlich aufrechterhalten werden, wenn neben der Energiebilanz aus die Mengenbilanz des im System strömenden Arbeitsmittels ausgegleichen und dabei sichergestellt wird, daß das Arbeitsmittel in den einzelnen Funktionskomponenten der Wärmepumpe, d.h. im Entgaser 12, Absorber 24, Desorber 26 und Resorber 14 bei den bestehenden Druckniveaus auch die erforderlichen Konzentrationen hat, und daß diese Konzentrationen auch ständig aufrechterhalten weden. Es ist ohne weiteres ersichtlich, daß diese Bedingung für einen kontinuierlichen Betrieb der Wärmepumpe nur dann erfüllt ist, wenn die Menge x und die Konzentration $\xi_{DE}$ des über die Verbindungsleitung 38 strömenden Arbeitsmittels gleich der Menge z und der Konzentration $\xi_{DD}$ des über die Verbindungsleitung 40 zurückströmenden Arbeitsmittels ist. D.h. es gelten die Gleichungen:

$$x = z$$
$$\xi_{DE} = \xi_{DD}$$

Die kontinuierlich Durchfürung des Prozesses derart, daß diese Bedingungen ständig eingehalten werden, ist insbesondere deshalb schwierig, weil im Desorber 26 durch die Zufuhr von Wärmeenergie $t_2$ aus dem als Arbeitsmittel verwendeten Ammoniak-Wassergemisch neben dem leichter flüchtigen Ammoniak auch ein relativ hoher Anteil von Wasserdampf austritt. Die dem Desorber 26 nachgeschaltete Reaktifizierungskolonne 42 dient also der Konzentrierung des Ammoniaks auf eine der Konzentration des in der Verbindungsleitung 38 stömenden Arbeitsmittels entsprechende Konzentration durch Kondensation des Wasserdampfs und Rückführung in den Desorber. Es ist klar, daß hierfür zusätzlich zu der in der Zeichnung nur schematisch angedeuteten Rektifizierungskolonne auch noch eine Überwachung für die Mengen x und z sowie die Konzentrationen $\xi_{DE}$ und $\xi_{DD}$ vorgesehen sein muß, welche in der nur schematischen Zeichnung der besseren Übersichtlichkeit halber nicht eingetragen ist.

In Figur 2 ist demgegenüber eine in ihre grundsätzlichen Funktion der vorstehend beschriebenen Wärmepumpe ähnliche Wärmepumpe 10' in der erfindungsgemäß weitergebildeten Ausgestaltung geseigt, bei welcher die Rektifizierungskolonne 42 entfällt, so daß die Konzentration $\xi_{DD}$ der leichter siedenden Komponente des in der Verbindungsleitung 40 zum Resorber 14 überströmenden Arbeitsmittels während des Betriebs der Wärmepumpe 10' in der Regel niedriger sein wird als die Konzentration $\xi_{DE}$ in der Verbindungsleitung 38. Somit würde es also zu einer Anreicherung von Ammoniak im Kreislauf II bzw. einer Verarmung von Ammoniak im Kreislauf I kommen, wenn die Konzentrationsunterschiede nicht - unter gleichzeitiger Berücksichtigung der Mengenbilanz des zwischen den Kreisläufen I und II insgesamt strömenden Arbeitsmittels - ausgeglichen würden. Dies erfolgt bei der Wärmepumpe 10' dadurch, daß niederdruckseitig zwischen den Kreisläufen I und II des flüssigen Arbeitsmittels eines Ausgleichsleitung 44 eingeschaltet ist, wobei ein Regelventil 46 mit steuerbarem Durchlaßquerschnitt eine Mengensteuerung des vom Kreislauf I zum Kreislauf II überströmenden flüssigen Arbeitsmittels mit der Konzentration $\xi_{aE}$ gestattet. Um einen vollständigen Mengenausgleich zwischen beiden Kreisläufen I und II unter Berücksichtigung der unterschiedlichen Konzentrationen des in den Verbindungsleitungen 38 und 40 sowie der Ausgleichleitung 44 strömenden Arbeitsmittels zu erhalten, erfolgt die Steuerung des Regelventils 46 von einer zentralen Prozeßrechnereinheit 48 aus, welcher laufend Informationen über die jeweiligen Konzentrationswerte $\xi_{DD}$; $\xi_{DE}$ und $\xi_{aE}$ sowie zusätzlich den Mengenstrom z des die Verbindungsleitung 40 durchströmenden Arbeitsmittels eingegeben und zu einem Stellsignal für die Einstellung des Durchlaßquerschnitts des Regelventils 46 aufbereitet werden. Die Konzentrationswerte lassen sich jeweils rechnerisch über die Messung des Drucks und der Temperatur des in der jeweiligen Leitung strömenden Arbeitsmittels ermitteln, während der Mengenstrom des Arbeitsmittels in der Leitung 40 beispielsweise über eine Differenzdruckmessung an einer Venturi-Düse oder Drosselblende in bekannter Weise ermittelbar ist. In Figur 2 ist ein solcher Mengemesser in Form einer schematisch dargestellten Drosselblende 50 in der Verbindungsleitung 40 schematisch dargestellt. In gleicher Weise sind die zur Ermittlung der Konzentrationswerte erforderlichen Druck- und Temperatur-Meßfühler 52 und 54 an der Leitung 40, 56 und 58 an der Leitung 38 und 60 und 62 an der Ausgleichsleitung 44 schematisch angedeutet. Der im Mengemesser 50 ermittelte Mengenstrom z ebenso wie die an den Druck- und Temperatur-Meßfühlern ermittelten und zu einem Konzentrationsvert zusammengefaßten Meßwerte werden dann über die in Figur 2 gestrichelt eingezeichneten Signalleitungen 64, 66, 68, 70 dem Proeßrechner 48 zugeführt. Die Steuerung des Durchlaßquerschnitts des Regelventils 46 erfolgt dann durch das im Rechner umgeformte Stellsignal, welches über eine Signalleitung 72 die Betätigung des Regelventils 46 auslöst. Wenn der in der Ausgleichsleitung 44 strömende Mengenstrom des flüssigen Arbeitsmittels mit y bezeichnet wird, ist die rechnerische Bedingung für einen kontinuierlichen Betrieb der Wärmepumpe 10' gegeben durch:

$$y = z \frac{\xi_{DE} - \xi_{DD}}{\xi_{DE} - \xi_{aE}}$$

Diese Gleichung für die Wärmepumpe ergibt sich unter Berücksichtigung der oben erwähnten Bedingung einer ausgeglichenen Mengen- und Konzentrationsbilanz für das zwischen den Kreisläufen ausgetauschte Arbeitsmittel in der nachstehend hergeleiteten Weise.

**Massenbilanz:**

$$x + y = z \text{ (für gesamte Menge)} \qquad (1)$$

$$x\,\xi_{DE} + y\,\xi_{aE} = z\,\xi_{DD} \text{ (für NH}_3\text{-Menge)} \qquad (2)$$

Setzt man (1) in (2), bekommt man

$$x\,\xi_{DE} + (z{-}x)\,\xi_{aE} = z\,\xi_{DD}$$

Daraus ergibt sich

$$x = z \cdot \frac{\xi_{DD}-\xi_{aE}}{\xi_{DE}-\xi_{aE}} \qquad (3)$$

Aus (1) und (3) ist

$$y = z{-}x = z{-}z\,\frac{\xi_{DD}-\xi_{aE}}{\xi_{DE}-\xi_{aE}}$$

Hieraus ergibt sich nach Umformung die oben angegebene Gleichung.

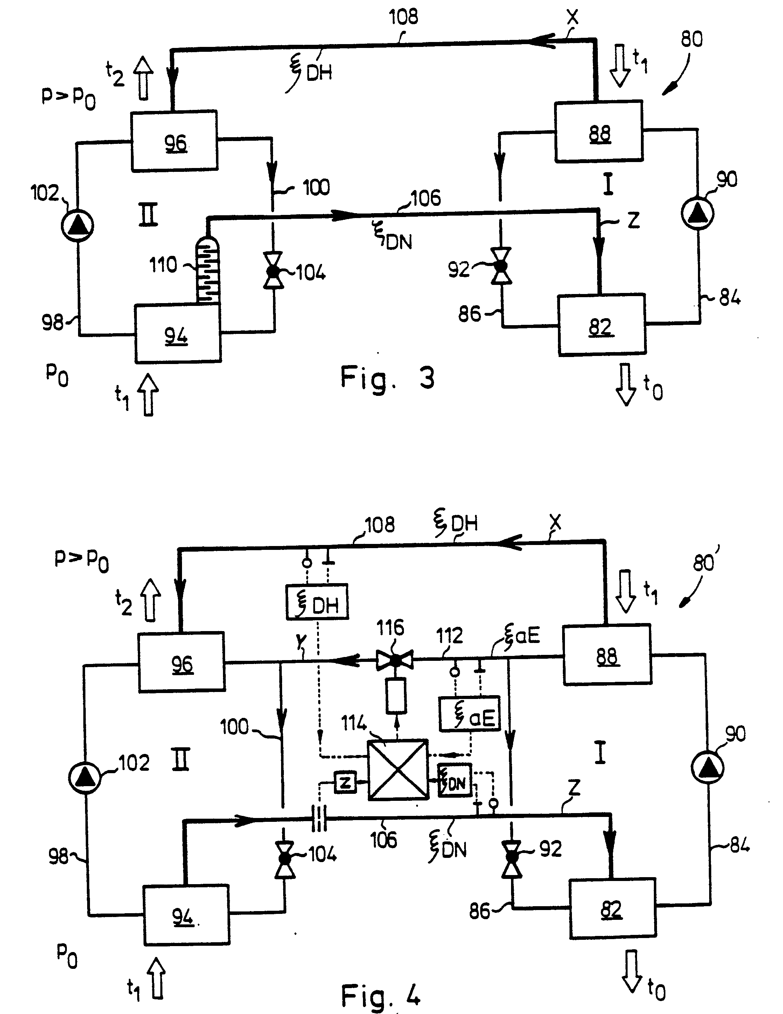

Anhand der Figuren 3 und 4, in denen der Aufbau eines konventionellen bzw. eines in der erfindungsmäßen Weise weitergebildeten Wärmetransformators 80 bzw. 80' schematisch schaltungtechnisch dargestellt ist, ist ersichtlich, daß der vorstehend in Verbindung mit der Wärmepumpe 10' beschriebene Erfindungsgedanke auch bei nach dem Resorptionsprinzip arbeitenden Wärmetransformatoren verwinklichbar ist.

Gemäß der in Figur 3 dargestellten Schaltung des bekannten Wärmetransformators 80 weist dierser wiederum zwei Kreisläufe I und II auf, in denen einerseits ein niederdruckseitiger Absorber 82 über Leitungen 84, 86 mit einem hochdruckseitigen Entgaser 88 zu einem inneren Kreislauf I von flüssigem Arbeitsmittel zusammengeschaltet sind, wobei eine Lösungspumpe 90 und ein Drosselorgan 92 in den Leitungen 84 bzw. 86 vorgesehen sind. Im Kreislauf II ist ein niederdruckseitiger Entgaser 94 mit einem hochdruckseitigen Resorber 96 über Leitungen 98, 100 zusammengeschaltet, wobei auch hier wieder eine Lösungspumpe 102 und ein Drosselorgan 104 in den Leitungen 98 bzw. 100 eingeschaltet sind. Der niederdruckseitige Absorber des Kreislaufs I und Entgaser der Kreislaufs II sind durch eine Verbindungsleitung 106 und der hochdruckseitige Entgaser des Kreislaufs I mit dem Resorber des Kreislaufs II durch eine Verbindungsleitung 108 miteinander verbunden. Die zum Ausgleich von Konzentrationsunterschieden in dem niederdruckseitig vom Entgaser 94 zum Absorber 82 strömenden gasförmigen Arbeitsmittel (Konzentration $\xi_{DN}$) und dem hochdruckseitig vom Entgaser 88 zum Resorber 96 strömenden gasförmigen Arbeitsmittel (Konzentration $\xi_{DH}$) dienende Rektifizierungskolonne 110 ist in diesem Fall zwischen den niederdruckseitigen Entgaser 94 und die Verbindungsleitung 106 geschaltet.

Als Bedingung für den kontinuierlichen Betrieb des Wärmetransformators gilt wieder, daß die Menge und Konzentration des über die Verbindungsleitung 106 vom niederdruckseitigen Entgaser 94 zum niederdruckseitigen Absorber 82 strömenden Arbeitsmittels gleich der Menge und Kenzentration des vom hochdruckseitigen Entgaser 88 zum Resorber 96 strömenden gasförmigen Arbeitsmittels sein muß.

Bei der in Figur 4 gezeigten Schaltung des in der erfindungsgemäßen Weise weitergebildeten Wärmetransformators 80' ist die Rektifizierungskolonne 110 des bekannten Wärmetransformators - entsprechend der in Verbindung mit Figur 2 beschriebenen Wärmepumpe 10' - durch ein rechnerüberwachtes- und -gesteuertes Ausgleichs-Schaltungssystem ersetzt, indem parallel zur hochdruckseitigen Verbindungsleitung 108 eine Ausgleichsleitung 112 mit einem von einer zentralen Prozeßrechnereinheit 114 stofenlos steuerbaren Regelventil 116 zwischen den Kreisläufen I und II vorgesehen ist. Der Rechnereinheit 114 werden wiederum die über Druck- und Temperatur-Meßfühler in den Verbindungsleitungen 106, 108 und der Ausgleichsleitung 112 ermittelten Konzentrationswerte $\xi_{DN}$; $\xi_{DH}$ und $\xi_{aE}$ zugeführt und außerdem der Mengenstrom z des in der Verbindungsleitung 106 strömenden Arbeitsmittels. Aus der zugeführten Meßwerten wird in der Rechnereinheit 114 wiederum ein Stellsignal für das Regelventil 116 umgeformt, welches die Menge des über die Ausgleichsleitung 112 strömenden flüssigen Arbeitsmittels in der erforderlichen Weise so steuert, daß Mengen- und Konzentrationsunterschiede in den Kreisläufen I und II ausgeglichen werden und somit ein kontinuierlicher Betrib des Wärmetransformators 80' aufrechterhalten wird.

Die für die Aufrechterhaltung des kontinuierlichen Betriebs des erfindungsgemäßen Wärmetransformators einzuhaltende Bedinung lautet im vorliegenden Fall also:

$$y = z\,\frac{\xi_{DH}-\xi_{DN}}{\xi_{DH}-\xi_{aE}}$$

worin y der Mengenstrom des in der Ausgleichsleitung 112 strömenden flüssigen Arbeitsmittels mit der Konzentration $\xi_{aE}$ ist, während $\xi_{DH}$ die Konzentration des in der hochdruckseitigen Verbindungsleitung 108 und $\xi_{DN}$ die Konzentration des in der niederdruckseitigen Verbindungsleitung 106 strömenden gasförmigen Arbeitsmittels ist.

Die Gleichung für den Wärmetransformator wird - analog zur Gleichung für die Wärmepumpe - abgeleitet:

**Massenbilanz:**

$$x + y = z \text{ (für gesamte Menge)} \qquad (1)$$

$$x\,\xi_{DH} + y\,\xi_{aE} = z\,\xi_{DN} \text{ (für NH}_3\text{-Menge)} \qquad (2)$$

Setzt man (1) in (2), bekommt man

$$x\,\xi_{DH} + (z-x)\xi_{8E} = z\,\xi_{DN}$$

Daraus ergibt sich

$$x = z\,\frac{\xi_{DN}-\xi_{8E}}{\xi_{DH}-\xi_{8E}} \tag{3}$$

Aus (1) und (3) ist

$$y = z-x = z-z\,\frac{\xi_{DN}-\xi_{8E}}{\xi_{DH}-\xi_{8E}}$$

woraus sich durch Umformung die oben angegebene Gleichung ergibt.

**Patentansprüche**

1. Resorptions-Wärmewandleranlage, wie Wärmepumpe, Kälteanlage oder Wärmetransformator, die mit einem Zweistoff-Arbeitsmittel, insbesondere einem Ammoniak-Wassergemisch, betrieben wird, um von einer äußeren Wärmeenergiequelle zugeführte Wärmeenergie auf ein höheres Temperaturniveau anzuheben, wobei die Anlage zwei Lösungskreisläufe aufweist, in welchen das Arbeitsmittel in flüssiger Phase von einem niedrigeren auf ein höheres Druckniveau gebracht und wieder auf das niedrigere Druckniveau entspannt wird, und zwischen den beiden Kreislaufan sowohl niederdruck als auch hochdruckseitig ja eine Verbindung besteht, in welchen in der Dampfphase befindliches Arbeitsmittel übartritt, und wobei parallel zu den Verbindungen eine Ausgleichsverbindung für strömendes flüssiges Arbeitsmittel mit von der Konzentration des in den Verbindungen strömenden Arbeitsmittels verschiedener Konzentration mit einem Ventil vorgesehen ist, dadurch gekennzeichnet, daß in der hoch und der niederdruckseitigen Verbindung (40; 38; 108; 106) der beiden Kreieläufe (I; II) je ein Druck- und ein Temperatur-Meßfühler (52, 54; 56, 58) vorgesehen sind, aus deren Meßwerten jeweils die Konzentration der leichter siedenden dampfförmigen Komponente des Zweistoff-Arbeitsmittels bezogen auf die gesamte dampfförmige Menge des Arbeitsmittels errechnet wird, daß in einer der beiden Verbindungen ein Mengenmesser (50) für den Mengenstrom des durchströmenden dampfförmigen Arbeitsmittels angeordnet ist, wobei in der Ausgleichsverbindung (44; 112) zur Ermittlung des Konzentrationswerts des dort strömenden flüssigen Arbeitsmittels ebenfalls ein Druck- und ein Temperatur-Meßfühler (60; 62) vorgesehen sind und das in der Ausgleichsverbindung (44; 112) vorgesehene Ventil als steuerbares Regelventil (46; 116) ausgebildet ist, und daß eine über Signalleitungen (66; 68; 70; 64) mit den Meßfühlern und dem Mengenmesser verbundene zentrale Rechnereinheit (48; 114) vorgesehen ist, in welcher die über die Signalleitungen zugeführten meßwertproportionalen Signale laufend verarbeitet und zu einem Stellsignal für die Öffnung oder Schließung des in der Ausgleichsverbindung (44; 112) angeordneten Regelventils (46; 116) umgewandelt werden, welches die Öffnung des Regelventils (46; 114) derart steuert, daß die Mengenbilanz des zwischen den beiden Kreisläufen (I; II) strömenden dampfförmigen Arbeitsmittels ausgeglichen wird.

2. Wärmewandler nach Anspruch 1, dadurch gekennzeichnet, daß die Wärmewandleranlage als Wärmepumpe (10') ausgebildet ist, und daß der Mangenmesser (50) in der hochdruckseitigen Verbindung (40) zwischen den Kreisläufen (I; II) und die Ausgleichsverbindung (44) auf der Niederdruckseite angeordnet sind.

3. Wärmewandleranlage nach Anspruch 1, dadurch gekennzeichnet, daß die Wärmewandleranlage als Wärmetransformator (80') ausgebildet ist, und daß der Mengenmesser in der niederdruckseitigen Verbindung (106) zwischen den Kreisläufen (I; II) und die Ausgleichsverbindung (112) auf der Hochdruckseite angeordnet sind.

**Claims**

1. Resorption thermal conversion plant, such as a heat pump, refrigeration machine or heat transformer, which is operated with a binary working medium, especially a mixture of ammonia and water, in order to raise to a higher temperature level the thermal energy supplied from an external thermal energy source, the plant having two solvent circuits in which the working medium in liquid phase is brought from a lower to a higher pressure level and is expanded again to the lower pressure lovel, and between the two circuits, both on the low-pressure and on the high-pressure side, an interconnecting conduit exists in which working medium that is in the vapor phase passes over while parallel to the circuits there is a balancing conduit with a valve for the flowing liquid working medium of a concentration different from that in the circuits, characterized in that, in the interconnecting conduit (40; 38; 108; 106) on the high-pressure and low-pressure sides, a pressure sensor and a temperature sensor (52, 54; 56, 58) are provided in each, from whose data the concentration of the lower-boiling, vaporous component of the binary working medium with respect to the total vaporous volume of the working medium is calculated, that in one of the two interconnecting conduits a volumeter (50) is provided for the volume of the vaporous working medium flowing through it, while in the balancing conduit (44; 112) likewise a pressure measuring sensor and a temperature measuring sensor (60; 62) is provided for determining the concentration of the liquid working medium flowing therein, and that the valve in the balancing conduit (44; 112) is an operable control valve (48; 118), and that a central computer unit (48; 114) connected to the measuring sensors and the volumeter via signal lines (66; 68; 70; 64) is provided, in which the signals proportional to the measured value delivered through the signal lines are continuously processed and converted to an actuating signal for the opening or closing of the control valve (46; 116) disposed in the compensating conduit (44; 112), and which controls the aperture of the control valve (46; 116) such that the volumetric difference of the vaporous working medium flowing between the two circuits (I; II) is compensated.

2. Thermal conversion plant according to claim 1, characterized in that the thermal conversion plant is designed as a heat pump (10') and that the volumeter (50) is arranged in the high-pressure conduit (40) between the circuits (I; II) and the balancing conduit (44) is arranged on the low-pressure side.

3. Thermal conversion plant according to claim 1, characterized in that the thermal conversion plant is designed as a heat transformer (80') and that the volumeter is arranged in the low-pressure side conduit (106) between the circuits (I; II) and the balancing conduit (112) on the high-pressure side.


**Revendications**

1. Installation de conversion thermique à résorption, telle que pompe à chaleur, installation frigorifique ou transformateur de chaleur, fonctionnant avec un fluide binaire de travail, en particulier un mélange ammoniac-eau, pour porter de l'énergie thermique amenée d'une source extérieure à un niveau de température plus élevé, cette installation présentant deux circuits de solution dans lesquels le fluide de travail en phase liquide est porté d'un bas à un haut niveau de pression et redétendu au bas niveau, et entre ces deux circuits existant aussi bien une liaison côté basse pression qu'une liaison côté haute pression dans lesquelles passe du fluide de travail en phase vapeur, et parallèlement à ces liaisons étant prévue une liaison d'équilibrage, pour du fluide de travail liquide en circulation ayant une concentration différente de la concentration du fluide de travail circulant dans les liaisons, et comportant un robinet, caractérisée par le fait que dans la liaison côté haute pression et dans la liaison côté basse pression (40, 38, 108, 106) des deux circuits (I; II) sont prévus un capteur de pression et un capteur de température (52, 54; 56, 58) à partir des valeurs mesurées desquels est calculée la concentration du constituant à l'état de vapeur à plus bas point d'ébullition du fluide binaire de travail par rapport à la quantité totale de fluide de travail à l'état de vapeur, que dans une des deux liaisons est placé un débitmètre (50) pour la mesure du débit du fluide de travail à l'état de vapeur qui circule dans cette liaison, dans la liaison d'équilibrage (44, 112) étant également prévu un capteur de pression et un capteur de température (60, 62) pour la détermination de la concentration du fluide de travail liquide qui y circule et le robinet prévu dans la liaison d'équilibrage (44, 112) étant un robinet de réglage (46, 116) pouvant être commandé, et qu'il est prévu une unité centrale de calcul (48, 114) reliée aux capteurs et au débitmètre dans laquelle les signaux proportionnels aux valeurs mesurées envoyés par les lignes de transmission de signaux sont en permanence traités et transformés en un signal de réglage pour l'ouverture ou la fermeture du robinet de réglage (46, 116) placé dans la liaison d'équilibrage (44, 112), lequel signal commandant l'ouverture du robinet de réglage (46, 116) de façon à équilibrer le bilan débits du fluide de travail à l'état de vapeur circulant entre les deux circuits (I; II).

2. Convertisseur thermique selon la revendication 1, caractérisé par le fait que l'installation de conversion thermique est constituée d'une pompe à chaleur (10') et que le débitmètre (50) est placé dans la liaison côté haute pression (40) entre les circuits (I; II) et la liaison d'équilibrage (44) est placée du côté basse pression.

3. Installation de conversion thermique selon la revendication 1, caractérisée par le fait qu'elle est constituée d'un transformateur de chaleur (80') et que le débitmètre est placé dans la liaison côté basse pression (108) entre les circuits (I; II) et la liaison d'équilibrage (112) est placée du côté haute pression.

Fig. 1

Fig. 2

Fig. 3

Fig. 4